# EUROPEAN PATENT APPLICATION

(11) **EP 4 557 858 A1**
(43) Date of publication of application: **21.05.2025**
(21) Application number: 23838700.5
(22) Date of filing: 28.06.2023
(51) Int. Cl.: H04W 72/04

(54) **DIRECT COMMUNICATION INTERFACE RESOURCE DETERMINATION METHOD, TERMINAL AND NETWORK DEVICE**

(30) Priority: 14.07.2022 CN 202210831050
(71) Applicant: Datang Mobile Communications Equipment Co., Ltd., Beijing 100085 (CN)
(72) Inventor: ZHAO, Yali, Beijing 100085 (CN); ZHANG, Huiying, Beijing 100085 (CN)
(74) Representative: Cabinet Nony
(86) International application number: PCT/CN2023/103460
(87) International publication number: WO 2024/012207

(57) **Abstract**

The present disclosure provides a method for determining sidelink resources, terminals, and network devices, which involves the field of wireless communication technologies. The sidelink communication transmitting terminal can receive the first indication information transmitted from the sidelink communication receiving terminal through the sidelink interface, wherein the first indication information is used to indicate the sidelink carriers and/or bandwidth parts recommended by the sidelink communication receiving terminal. Based on the first indication information, the sidelink communication transmitting terminal performs selection or reselection of the sidelink carriers and/or bandwidth parts, and transmits data using the selected sidelink carrier and/or or bandwidth part, thereby ensuring that the sidelink communication receiving terminal can accurately receive the data transmitted by the sidelink communication transmitting terminal, and improving the performance of unicast communication.

## Description

### CROSS-REFERENCE OF RELATED APPLICATION

The present disclosure claims priority to Chinese patent application No. 202210831050.9 filed on July 14, 2022 to the China National Intellectual Property Administration, and entitled "method, terminal and network device for determining sidelink resource", the entire content of which is incorporated herein by reference.

### TECHNICAL FIELD

The present disclosure relates wireless communication technical field, in particular to a method, terminal and network device for determining sidelink resource.

### BACKGROUND

In the fifth generation (5G) New Radio (NR) communication technology, sidelink communication (also known as bypass communication) is supported, which means that data is transmitted between terminals through a sidelink interface (SL). To enhance a peak rate and reliability of sidelink communication, the multi-carrier and/or multi-Bandwidth Part (BWP) mechanisms have been introduced. The multi-carrier mechanism requires consideration of the selection and reselection of sidelink carriers and/or BWPs.

The Long Term Evolution (LTE) sidelink communication system also supports the multi-carrier mechanism. However, for the LTE sidelink communication system, since the air interface transmission technology is carried out in a broadcast or multicast manner, the selection and reselection of its sidelink carriers do not need to consider whether the sidelink communication receiving terminals may accurately receive the data.

For the 5G NR sidelink communication system, the air interface transmission technology supports unicast communication. In the case of unicast communication, how to ensure that the sidelink communication receiving terminals may accurately receive the data transmitted from the sidelink communication transmitting terminals is a problem that urgently needs to be solved.

### SUMMARY

To solve the problems existing in the prior art, the embodiments of the disclosure provide a method for determining sidelink resources, terminals, and network devices, which may ensure that the sidelink communication receiving terminals accurately receive the data transmitted by the sidelink communication transmitting terminals.

To achieve the above objectives, the technical solutions of the embodiments of the present disclosure are implemented as follows.

In a first aspect, the embodiments of the present disclosure provide a method for determining sidelink communication resources, which is applied to a sidelink communication transmitting terminal. The method includes:
Receiving first indication information transmitted from a sidelink communication receiving terminal through a sidelink interface; the first indication information is used to indicate the sidelink carriers and/or bandwidth parts recommended by the sidelink communication receiving terminal.

Based on the first indication information, performing selection or reselection of the sidelink carriers and/or bandwidth parts.

In an optional embodiment, the sidelink carriers and/or bandwidth parts recommended by the sidelink communication receiving terminal includes at least one of the following contents: The sidelink carriers and/or bandwidth parts currently available to the sidelink communication receiving terminal;
The sidelink carriers and/or bandwidth parts supported by the capabilities of the sidelink communication receiving terminal.

In an optional embodiments, performing selection or re-selection of the sidelink carriers and/or bandwidth parts based on the first indication information comprises:
determining a first intersection of the sidelink carriers and/or bandwidth parts supported by capabilities of the sidelink communication transmitting terminal and the sidelink carriers and/or bandwidth parts indicated by the first indication information, and taking the sidelink carriers and/or bandwidth parts comprised in the first intersection as a candidate resource when the sidelink communication transmitting terminal performs selection or re-selection of the sidelink carriers and/or bandwidth parts; or
determining a second intersection between the sidelink carriers and/or bandwidth parts supported by capabilities of the sidelink communication transmitting terminal, the sidelink carriers and/or bandwidth parts indicated by the first indication information and the sidelink carriers and/or bandwidth parts in a sidelink resource pool configured by a network device, and taking the sidelink carriers and/or bandwidth parts comprised in the second intersection as the candidate resource when the sidelink communication transmitting terminal performs selection or re-selection of the sidelink carriers and/or bandwidth parts;
wherein the network device is a network device that serves the sidelink communication transmitting terminal.

In an optional embodiments, the method further includes:
in the case that the candidate resource is licensed spectrum, performing selection or re-selection of the sidelink carriers and/or bandwidth parts based on a channel busy radio (CBR) or an sidelink interface channel statement information (SL-CSI) on the licensed spectrum;
in the case that the candidate resource is unlicensed spectrum, performing selection or re-selection of the sidelink carriers and/or bandwidth parts based on received signal strength indication (RSSI) or channel occupation (CO) on the unlicensed spectrum.

In an optional embodiment, performing selection or re-selection of the sidelink carriers and/or bandwidth parts based on the first indication information comprises:
In the case that the sidelink communication transmitting terminal is in radio resource control (RRC) connected state at an Uu interface, or in the case that the sidelink communication transmitting terminal is in RRC connected state at the Uu interface and uses a resource allocation mode scheduled by network, transmitting, by the sidelink communication transmitting terminal, the sidelink carriers and/or bandwidth parts recommended by the sidelink communication receiving terminal as a resource indication information to a network device that serves the sidelink communication transmitting terminal, and receiving resource configuration information transmitted from the network device, determining the sidelink carriers and/or bandwidth parts to be used by the sidelink communication transmitting device based on the resource configuration information.

In an optional embodiments, the method further includes:
transmitting second indication information to the sidelink communication receiving terminal through the sidelink interface; wherein the second indication information comprises sidelink carriers and/or bandwidth parts available to the sidelink communication transmitting terminal at the sidelink interface; or sidelink carriers and/or bandwidth parts available to the sidelink communication transmitting terminal when performing data transmission to the sidelink communication receiving terminal at the sidelink interface.

In a second aspect, embodiments of the present disclosure provide a method for determining a sidelink communication resource, which applied to a sidelink communication receiving terminal, the method comprises:
Generating first indication information, wherein the first indication information is used to indicate one or more sidelink carriers and/or bandwidth parts recommended by the sidelink communication receiving terminal; transmitting the first indication information to a sidelink communication transmitting terminal through a sidelink interface.

In an optional embodiments, the sidelink carriers and/or bandwidth parts recommended by the sidelink communication receiving terminal comprises at least one of the following:
The sidelink carriers and/or bandwidth parts currently available to the sidelink communication receiving terminal; or
The sidelink carriers and/or bandwidth parts supported by capabilities of the sidelink communication receiving terminal.

In an optional embodiment, in the case that the sidelink carriers and/or bandwidth parts recommended by the sidelink communication receiving terminal comprises the sidelink carriers and/or bandwidth parts currently available to the sidelink communication receiving terminal, determining, by the sidelink communication receiving terminal, the bandwidth part currently available to the sidelink communication receiving terminal through any one scheme of following:
Determining the sidelink carriers and/or bandwidth parts currently available to the sidelink communication receiving terminal based on carrier capability information of the sidelink communication receiving terminal and/or channel quality on each carrier;
Determining the sidelink carriers and/or bandwidth parts currently available to the sidelink communication receiving terminal based on the carrier capability information of the sidelink communication receiving terminal and/or interference situation on each carrier;
Taking the sidelink carriers and/or bandwidth parts which satisfies a first set condition as the sidelink carriers and/or bandwidth parts currently available to the sidelink communication receiving terminal; wherein the first set condition comprises any one or a combination of the following conditions:
   Channel busy ratio (CBR) corresponding to the sidelink carriers and/or bandwidth parts is lower than a CBR threshold;
   Reference signal receiving power (RSRP) corresponding to the sidelink carriers and/or bandwidth parts is lower than an RSRP threshold;
   Receiving signal strength indicator (RSSI) corresponding to the sidelink carriers and/or bandwidth parts is lower than an RSSI threshold;
   Channel occupation (CO) corresponding to the sidelink carriers and/or bandwidth parts is lower than a CO threshold;
   The sidelink carriers and/or bandwidth parts supported by both the sidelink communication transmitting terminal and the sidelink communication receiving terminal.

In an optional embodiment, the method further comprises:
Receiving second indication information transmitted from the sidelink communication transmitting terminal through the sidelink interface; wherein the second indication information comprises sidelink carriers and/or bandwidth parts available to the sidelink communication transmitting terminal at the sidelink interface; or sidelink carriers and/or bandwidth parts available to the sidelink communication transmitting terminal when performing data transmission to the sidelink communication receiving terminal at the sidelink interface;
Determining the sidelink carriers and/or bandwidth parts to be monitored based on the second indication information.

In a third aspect, embodiments of the present disclosure provide a method for determining a sidelink resource, applied to a network device, comprising:
Receiving resource indication information transmitted from a sidelink communication transmitting terminal, wherein the resource indication information comprises one or more sidelink carriers and/or bandwidth parts recommended by a sidelink communication receiving terminal; the sidelink communication receiving terminal communicates with the sidelink communication transmitting terminal directly;
Transmitting resource configuration information to the sidelink communication transmitting terminal.

In an optional embodiment, in the case that the sidelink communication transmitting terminal is in radio resource control (RRC) connected state at an Uu interface and uses a resource allocation mode selected by terminal itself, the resource configuration information comprises resource pool configuration information on the sidelink carrier and/or the bandwidth available to the sidelink communication transmitting terminal at the sidelink interface;
In the case that the sidelink communication transmitting terminal is in radio resource control (RRC) connected state at an Uu interface and uses a resource allocation mode scheduled by network, the resource configuration information comprises transmission resource on the sidelink carrier and/or the bandwidth available to the sidelink communication transmitting terminal at the sidelink interface.

In a fourth aspect, embodiments of the present disclosure provide a sidelink communication transmitting terminal, comprising:
A first receiving unit, configured to receive first indication information transmitted from a sidelink communication receiving terminal through a sidelink interface, wherein the first indication information is used to indicate one or more sidelink carriers and/or bandwidth parts recommended by the sidelink communication receiving terminal;
A resource selecting unit, configured to perform selection or re-selection of the sidelink carriers and/or bandwidth parts based on the first indication information.

In a fifth aspect, embodiments of the present disclosure provide a sidelink communication receiving terminal, comprising:
An information generating unit, configured to generate first indication information, wherein the first indication information is used to indicate one or more sidelink carriers and/or bandwidth parts recommended by the sidelink communication receiving terminal;
A first transmitting unit, configured to transmit the first indication information to a sidelink communication transmitting terminal through a sidelink interface.

In a sixth aspect, embodiments of the present disclosure provide a network device, comprising:
A second receiving unit, configured to receive resource indication information transmitted from a sidelink communication transmitting terminal, wherein the resource indication information comprises one or more sidelink carriers and/or bandwidth parts recommended by a sidelink communication receiving terminal; the sidelink communication receiving terminal communicates with the sidelink communication transmitting terminal directly;
A second transmitting unit, configured to transmit the resource configuration information to the sidelink communication transmitting terminal.

In a seventh aspect, embodiments of the present disclosure provide A terminal, wherein the terminal is a sidelink communication transmitting terminal, comprising: a memory, a transceiver and a processor;
The memory, configured to store computer instructions;
The transceiver, configured to receive and transmit data under the control of the processor;
The processor, configured to read the computer instructions in the memory and execute following operations:
   Controlling the transceiver to receive first indication information transmitted from a sidelink communication receiving terminal through a sidelink interface, and perform selection or re-selection of one or more sidelink carriers and/or bandwidth parts based on the first indication information, wherein the first indication information is used to indicate the sidelink carriers and/or bandwidth parts recommended by the sidelink communication receiving terminal.

In an optional embodiment, the sidelink carriers and/or bandwidth parts recommended by the sidelink communication receiving terminal comprises at least one of the following:
The sidelink carriers and/or bandwidth parts currently available to the sidelink communication receiving terminal; or
The sidelink carriers and/or bandwidth parts supported by capabilities of the sidelink communication receiving terminal.

In an optional embodiment, the processor is specifically configured to:
Determine a first intersection of the sidelink carriers and/or bandwidth parts supported by capabilities of the sidelink communication transmitting terminal and the sidelink carriers and/or bandwidth parts indicated by the first indication information, and take the sidelink carriers and/or bandwidth parts comprised in the first intersection as a candidate resource when the sidelink communication transmitting terminal performs selection or re-selection of the sidelink carriers and/or bandwidth parts; or
Determine a second intersection between the sidelink carriers and/or bandwidth parts supported by capabilities of the sidelink communication transmitting terminal, the sidelink carriers and/or bandwidth parts indicated by the first indication information and the sidelink carriers and/or bandwidth parts in a sidelink resource pool configured by a network device, and take the sidelink carriers and/or bandwidth parts comprised in the second intersection as the candidate resource when the sidelink communication transmitting terminal performs selection or re-selection of the sidelink carriers and/or bandwidth parts;
Wherein the network device is a network device that serves the sidelink communication transmitting terminal.

In an optional embodiment, the processor is further configured to:
In the case that the candidate resource is licensed spectrum, perform selection or re-selection of the sidelink carriers and/or bandwidth parts based on a channel busy radio (CBR) or an side link channel statement information (SL-CSI) on the licensed spectrum;
In the case that the candidate resource is unlicensed spectrum, perform selection or re-selection of the sidelink carriers and/or bandwidth parts based on received signal strength indication (RSSI) or channel occupation (CO) on the unlicensed spectrum.

In an optional embodiment, the processor is specifically configured to:
In the case that the sidelink communication transmitting terminal is in radio resource control (RRC) connected state at an Uu interface, or in the case that the sidelink communication transmitting terminal is in RRC connected state at the Uu interface and uses a resource allocation mode scheduled by network, transmit, by the transceiver, the sidelink carriers and/or bandwidth parts recommended by the sidelink communication receiving terminal as a resource indication information to a network device that serves the sidelink communication transmitting terminal, and receive, by the transceiver, resource configuration information transmitted from the network device, determine the sidelink carriers and/or bandwidth parts to be used by the sidelink communication transmitting device based on the resource configuration information.

In an optional embodiment, the processor is specifically configured to:
Controlling the transceiver to transmit second indication information to the sidelink communication receiving terminal through the sidelink interface; wherein the second indication information comprises sidelink carriers and/or bandwidth parts available to the sidelink communication transmitting terminal at the sidelink interface; or sidelink carriers and/or bandwidth parts available to the sidelink communication transmitting terminal when performing data transmission to the sidelink communication receiving terminal at the sidelink interface.

In an eighth aspect, the embodiments of the present disclosure provide a sidelink communication receiving terminal. The terminal includes: a memory, a transceiver, and a processor;
The memory is used to store computer instructions;
The transceiver is used to send and receive data under the control of the processor;
The processor is used to read the computer program in the memory and execute the following steps:
   Generating first indication information, where the first indication information is used to indicate the sidelink carriers and/or bandwidth parts recommended by the sidelink communication receiving terminal; controlling the transceiver to transmit the first indication information to the sidelink communication transmitting terminal through the sidelink interface.

In an optional embodiment, the sidelink carriers and/or bandwidth parts recommended by the sidelink communication receiving terminal comprises at least one of the following:
The sidelink carriers and/or bandwidth parts currently available to the sidelink communication receiving terminal; or
The sidelink carriers and/or bandwidth parts supported by capabilities of the sidelink communication receiving terminal.

In an optional embodiment, in the case that the sidelink carriers and/or bandwidth parts recommended by the sidelink communication receiving terminal comprises the sidelink carriers and/or bandwidth parts currently available to the sidelink communication receiving terminal, the processor is configured to:
Determine the bandwidth part currently available to the sidelink communication receiving terminal through any one scheme of following:
Determining the sidelink carriers and/or bandwidth parts currently available to the sidelink communication receiving terminal based on carrier capability information of the sidelink communication receiving terminal and/or channel quality on each carrier;
Determining the sidelink carriers and/or bandwidth parts currently available to the sidelink communication receiving terminal based on the carrier capability information of the sidelink communication receiving terminal and/or interference situation on each carrier;
Taking the sidelink carriers and/or bandwidth parts which satisfies a first set condition as the sidelink carriers and/or bandwidth parts currently available to the sidelink communication receiving terminal; wherein the first set condition comprises any one or a combination of the following conditions:
   Channel busy ratio (CBR) corresponding to the sidelink carriers and/or bandwidth parts is lower than a CBR threshold;
   Reference signal receiving power (RSRP) corresponding to the sidelink carriers and/or bandwidth parts is lower than an RSRP threshold;
   Receiving signal strength indicator (RSSI) corresponding to the sidelink carriers and/or bandwidth parts is lower than an RSSI threshold;
   Channel occupation (CO) corresponding to the sidelink carriers and/or bandwidth parts is lower than a CO threshold;
   the sidelink carriers and/or bandwidth parts supported by both the sidelink communication transmitting terminal and the sidelink communication receiving terminal.

In an optional embodiment, the processor is further configured to:
Control the transceiver to receive second indication information transmitted from the sidelink communication transmitting terminal through the sidelink interface; wherein the second indication information comprises sidelink carriers and/or bandwidth parts available to the sidelink communication transmitting terminal at the sidelink interface; or sidelink carriers and/or bandwidth parts available to the sidelink communication transmitting terminal when performing data transmission to the sidelink communication receiving terminal at the sidelink interface; and
Determine the sidelink carriers and/or bandwidth parts to be monitored based on the second indication information.

In an ninth aspect, the embodiments of the present disclosure provide a network device, the network device comprises: a memory, a transceiver and a processor;
The memory, configured to store computer instructions;
The transceiver, under control of the processor, configured to receive resource indication information transmitted from a sidelink communication transmitting terminal; wherein the resource indication information comprises one or more sidelink carriers and/or bandwidth parts recommended by a sidelink communication receiving terminal; the sidelink communication receiving terminal communicates with the sidelink communication transmitting terminal directly;
Transmit the resource configuration information to the sidelink communication transmitting terminal.

In an optional embodiment, in the case that the sidelink communication transmitting terminal is in radio resource control (RRC) connected state at an Uu interface and uses a resource allocation mode selected by terminal itself, the resource configuration information comprises resource pool configuration information on the sidelink carrier and/or the bandwidth available to the sidelink communication transmitting terminal at the sidelink interface;
In the case that the sidelink communication transmitting terminal is in radio resource control (RRC) connected state at an Uu interface and uses a resource allocation mode scheduled by network, the resource configuration information comprises transmission resource on the sidelink carrier and/or the bandwidth available to the sidelink communication transmitting terminal at the sidelink interface.

In a tenth aspect, embodiments of the present disclosure provide a computer readable storage medium, the computer readable storage medium stores computer instructions, which are executed by a processor, implementing the method according to any one of the first aspect to the third aspect.

The methods for determining sidelink resources, terminals and network devices provided by the embodiments of the present disclosure enable the sidelink communication transmitting terminal to receive the first indication information transmitted from the sidelink communication receiving terminal through the sidelink interface, wherein the first indication information is used to indicate the sidelink carriers and/or bandwidth parts recommended by the sidelink communication receiving terminal. Based on the first indication information, the sidelink communication transmitting terminal performs selection or reselection of the sidelink carriers and/or bandwidth parts, and transmits data using the selected sidelink carriers and/or bandwidth parts. Thus, it can ensure that the sidelink communication receiving terminal can accurately receive the data transmitted from the sidelink communication transmitting terminal, thereby improving the performance of unicast communication

### BRIEF DESCRIPTION OF DRAWINGS

In order to illustrate the technical solutions in the embodiments of the present disclosure or in the prior art more clearly, the accompanying drawings to be used in the description of the embodiments or the prior art will be briefly introduced below. Obviously, the accompanying drawings in the following description are only some embodiments of the present invention. For those of ordinary skill in the art, other accompanying drawings can also be obtained based on these drawings without creative efforts.
FIG. 1 is a schematic structural diagram of a communication system applicable to the embodiments of the present disclosure;
FIG. 2 is an interactive flowchart of a method for determining sidelink communication resources provided by the embodiments of the present disclosure;
FIG. 3 is an interactive flowchart of another method for determining sidelink communication resources provided by the embodiments of the present disclosure;
FIG. 4 is an interactive flowchart of another method for determining sidelink communication resources provided by the embodiments of the present disclosure;
FIG. 5 is a schematic flowchart of a method for determining sidelink communication resources provided by the embodiments of the present disclosure;
FIG. 6 is a schematic flowchart of another method for determining sidelink communication resources provided by the embodiments of the present disclosure;
FIG. 7 is a schematic flowchart of another method for determining sidelink communication resources provided by the embodiments of the present disclosure;
FIG. 8 is a block diagram of the structure of a terminal provided by the embodiments of the present disclosure;
FIG. 9 is a block diagram of the structure of another terminal provided by the embodiments of the present disclosure;
FIG. 10 is a block diagram of the structure of a network device provided by the embodiments of the present disclosure;
FIG. 11 is a schematic structural diagram of a terminal provided by the embodiments of the present disclosure;
FIG. 12 is a schematic structural diagram of another terminal provided by the embodiments of the present disclosure;
FIG. 13 is a schematic structural diagram of a network device provided by the embodiments of the present disclosure.

### DETAILED DESCRIPTION

The following explains some terms in the embodiments of the present disclosure to facilitate understanding by the people skilled in the art.
(1) Carrier: It refers to a radio wave of a specific frequency, with the unit of Hz. A carrier is an electromagnetic wave that is modulated in terms of frequency, amplitude, or phase to transmit voice, audio, image, or other signals.
(2) Bandwidth Part (BWP): A BWP may be regarded as a part of the frequency resources. A carrier may be divided into one BWP or multiple BWPs. Each BWP may use different parameter sets, and the parameter sets include but are not limited to bandwidth, sub-carrier spacing, etc.

The following provides a detailed description of the specific implementation manners of the present disclosure with reference to the accompanying drawings. It should be understood that the specific implementation manners described here are only used for illustrating and explaining the present disclosure, and are not intended to limit the present disclosure.

It should be noted that "first" and "second" in the embodiments of the present disclosure are used to distinguish similar objects rather than to describe a specific order or sequence. "And/or" in the embodiments of the present disclosure describes the association relationship of associated objects, indicating that there may be three relationships. For example, "A and/or B" may mean: the existence of A alone, the coexistence of A and B, and the existence of B alone. The character "/" generally indicates that the associated objects before and after it have an "or" relationship.

The network architecture and service scenarios described in the embodiments of the present disclosure are for the purpose of more clearly illustrating the technical solutions of the embodiments of the present disclosure and do not constitute a limitation on the technical solutions provided by the embodiments of the present disclosure. As may be known by those of ordinary skill in the art, with the evolution of the network architecture and the emergence of new service scenarios, the technical solutions provided by the embodiments of the present disclosure are also applicable to similar technical problems.

Currently, for the LTE sidelink interface, since the air interface transmission technology is carried out in a broadcast or multicast manner, the selection and reselection of the sidelink carriers do not need to consider whether the sidelink communication receiving terminals may accurately receive the data. However, for the 5G NR sidelink interface, the air interface transmission technology supports unicast communication. In the process of unicast communication, how to enable the sidelink communication receiving terminals to accurately receive the data transmitted by the sidelink communication transmitting terminals is a problem that urgently needs to be solved.

Based on the situation, the embodiments of the present disclosure provide a method for determining sidelink resources, terminals, and network devices. The sidelink communication transmitting terminal may receive a first indication information transmitted from the sidelink communication receiving terminal through the sidelink interface, wherein the first indication information is used to indicate the sidelink carriers and/or bandwidth parts recommended by the sidelink communication receiving terminal. Based on the first indication information, the sidelink communication transmitting terminal performs the selection or reselection of the sidelink carriers and/or bandwidth parts, and uses selected sidelink carriers and/or bandwidth parts to transmit data, thereby ensuring that the sidelink communication receiving terminals may accurately receive the data transmitted by the sidelink communication transmitting terminals and improving the performance of unicast communication.

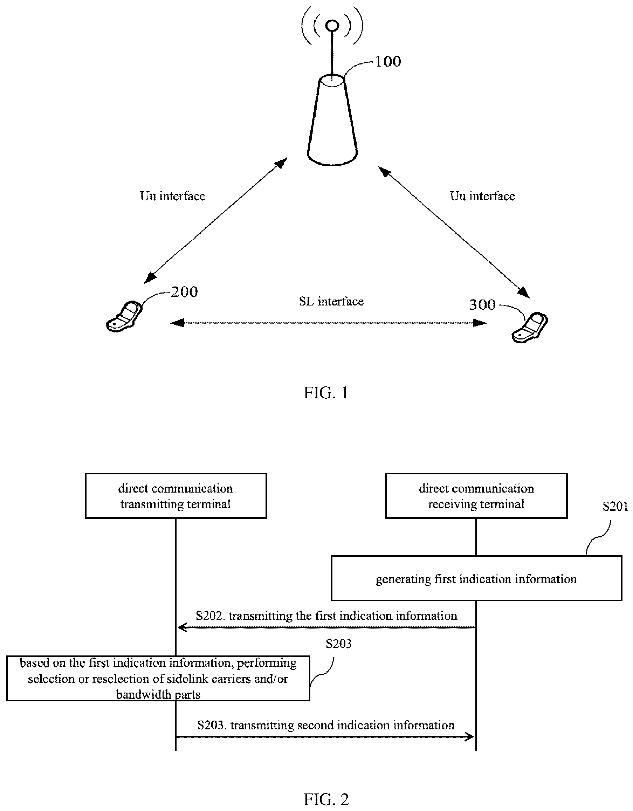

FIG. 1 is a schematic structural diagram of a communication system applied to the embodiments of the present disclosure. As shown in FIG. 1, the communication system includes network device 100 and multiple terminals. In FIG. 1, two terminals are taken as an example for illustration, and the two terminals are a first terminal 200 and a second terminal 300 respectively. The terminals and the network device 100 may communicate through an Uu interface, that is, transmit uplink and downlink data or control information through the Uu interface. The Uu interface is a wireless communication interface between the terminals and the network device, and the terminals may access the fixed network part of the mobile communication system through the Uu interface.

The first terminal 200 and the second terminal 300 may communicate directly through the SL interface. sidelink communication refers to the way in which adjacent terminals may transmit data within a short distance range through the SL link. The wireless interface corresponding to the SL link may be called a sidelink interface, also known as the sidelink carrier or the SL interface.

The network device 100 is a device that provides wireless communication functions for terminals, including but not limited to: the next-generation base station (generation Node B, gNB) in 5G, RNC (Radio Network Controller), NB (Node B), BSC (Base Station Controller), BTS (Base Transceiver Station), HNB (Home Evolved NodeB, or Home Node B, home base station), BBU (Baseband Unit), TRP (Transmitting and Receiving Point), TP (Transmitting Point), mobile switching center, etc. The network device 100 may also be a device that provides wireless communication functions for terminals in other communication systems that may emerge in the future.

The terminal may be a device with wireless communication functions and may also be called UE (User Equipment). Exemplarily, the terminal may be a mobile phone, an ipad (tablet computer), a computer with wireless transceiver functions, a VR (Virtual Reality) terminal, an AR (Augmented Reality) terminal, a wireless terminal in industrial control, etc. Both the first terminal 200 and the second terminal 300 shown in FIG. 1 may provide voice and/or data connectivity to users, have wireless connection functions, and may be connected to wireless modems, etc. The first terminal 200 and the second terminal 300 may communicate with one or more core networks via the network device 100.

In some embodiments, the sidelink communication transmitting terminal may receive the first indication information transmitted by the sidelink communication receiving terminal through the sidelink interface, and based on the first indication information, perform the selection or reselection of the sidelink carriers and/or bandwidth parts. Exemplarily, FIG. 2 shows an interactive flowchart of a method for determining a sidelink communication resource provided by the embodiments of the present disclosure. As shown in FIG. 2, the method includes the following steps:
Step S201, the sidelink communication receiving terminal generates the first indication information.

Wherein, the first indication information is used to indicate the sidelink carrier and/or BWP recommended by the sidelink communication receiving terminal.

In some embodiments, the sidelink carrier and/or BWP recommended by the sidelink communication receiving terminal may specifically be the SL carrier and/or BWP currently available to the sidelink communication receiving terminal.

In other embodiments, the sidelink carrier and/or BWP recommended by the sidelink communication receiving terminal may specifically be the SL carrier and/or BWP supported by the capabilities of the sidelink communication receiving terminal.

In other embodiments, the sidelink carrier and/or BWP recommended by the sidelink communication receiving terminal may include: an intersection of the SL carrier and/or BWP currently available to the sidelink communication receiving terminal and the SL carrier and/or BWP supported by the capabilities of the sidelink communication receiving terminal.

In some embodiments, the sidelink communication receiving terminal may determine the SL carrier and/or BWP currently available to the sidelink communication receiving terminal in any of the following ways:
Way 1: Determining the SL carrier and/or BWP currently available to the sidelink communication receiving terminal based on carrier capability information of the sidelink communication receiving terminal and/or channel quality on each carrier.
Way 2: Determining the SL carrier and/or BWP currently available to the sidelink communication receiving terminal based on the carrier capability information of the sidelink communication receiving terminal and/or interference situation on each carrier.
Way 3: Taking a SL carrier and/or BWP that satisfies a first set condition as the SL carrier and/or BWP currently available to the sidelink communication receiving terminal. The first set condition includes any one or combination of the following conditions:

The CBR (Channel Busy Ratio) corresponding to the SL carrier and/or BWP is lower than a CBR threshold.

The RSRP (Reference Signal Receiving Power) corresponding to the SL carrier and/or BWP is lower than a RSRP threshold.

The RSSI (Received Signal Strength Indicator) corresponding to the SL carrier and/or BWP is lower than a RSSI threshold.

The CO (Channel Occupation) corresponding to the SL carrier and/or BWP is lower than a CO threshold.

The SL carrier and/or BWP is a SL carrier and/or BWP supported by both the sidelink communication transmitting terminal and the sidelink communication receiving terminal.

Step S202, the sidelink communication receiving terminal transmits the first indication information to the sidelink communication transmitting terminal.

The sidelink communication receiving terminal may transmit the first indication information to the sidelink communication transmitting terminal through the sidelink interface.

In some embodiments, when the sidelink carrier and/or BWP recommended by the sidelink communication receiving terminal is the SL carrier and/or BWP supported by the capabilities of the sidelink communication receiving terminal, the first indication information may be directly carried in the UE capability interaction signaling and transmitted to the sidelink communication transmitting terminal during the process of UE capability interaction through the PC5 interface; wherein the PC5 interface refers to the interface for sidelink communication between terminals.

In other embodiments, when the sidelink carrier and/or BWP recommended by the sidelink communication receiving terminal is the SL carrier and/or BWP currently available to the sidelink communication receiving terminal, the first indication information may be transmitted using PC5-RRC (Radio Resource Control) signaling, MAC (Media Access Control), CE (Control Element), or SCI (sidelink interface-Channel State Information) indication. The PC5-RRC signaling refers to the RRC layer control signaling transmitted through the PC5 interface.

Step S203, the sidelink communication transmitting terminal performs the selection or reselection of the sidelink carrier and/or BWP based on the first indication information.

In an optional embodiment, the sidelink communication transmitting terminal may determine a first intersection of SL carriers and/or BWPs supported by the capabilities of the sidelink communication transmitting terminal and the SL carriers and/or BWPs indicated by the first indication information, and then take SL carriers and/or BWPs included in the first intersection as candidate resources when the sidelink communication transmitting terminal performs the selection or reselection of the SL carrier and/or BWP.

Exemplarily, in the case that the candidate resources described above are licensed spectrum, the sidelink communication transmitting terminal may perform the selection or reselection of the SL carrier and/or BWP based on CBR or SL-CSI (sidelink interface- (Channel Statement Information)) of the licensed spectrum. In the case that the candidate resources described above are unlicensed spectrum, the sidelink communication transmitting terminal may perform the selection or reselection of the SL carrier and/or BWP based on RSSI or CO on the unlicensed spectrum.

Step S204, the sidelink communication transmitting terminal transmits a second indication information to the sidelink communication receiving terminal.

In an optional embodiment, the sidelink communication transmitting terminal may transmit the second indication information to the sidelink communication receiving terminal through the sidelink interface. The second indication information includes the sidelink carrier and/or BWP available to the sidelink communication transmitting terminal at the sidelink interface, or the sidelink carrier and/or BWP available to the sidelink communication transmitting terminal when transmitting data to the sidelink communication receiving terminal at the sidelink interface.

After receiving the second indication information, the sidelink communication receiving terminal may determine the SL carrier and/or BWP to be monitored based on the second indication information.

In the embodiment, the sidelink communication receiving terminal may only monitor the SL carriers and/or BWPs available to the sidelink communication transmitting terminal, instead of monitoring all SL carriers and/or BWPs. Thus, the power consumption of the sidelink communication receiving terminal may be reduced, achieving the effect of power saving.

The above step S204 is an optional step. In one embodiment, the sidelink communication transmitting terminal may also not execute the above step S204. If the sidelink communication transmitting terminal does not transmit the second indication information to the sidelink communication receiving terminal, the sidelink communication receiving terminal may monitor all SL carriers and/or BWPs that it supports or may use.

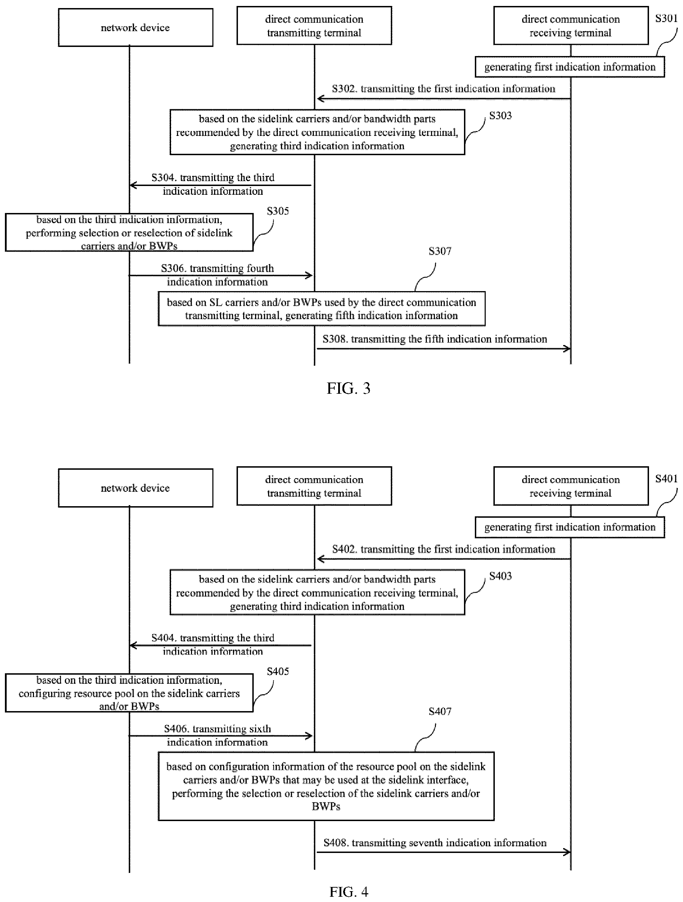

In other embodiments, the sidelink communication transmitting terminal may transmit the content of the first indication information to the network device, and the network device may perform the selection of the sidelink carrier and/or BWP, wherein the network device is a network device that serves the sidelink communication transmitting terminal. Exemplarily, FIG. 3 shows an interactive flowchart of another method for determining sidelink communication resource provided by the embodiments of the present disclosure. As shown in FIG. 3, the method includes the following steps:
Step S301, the sidelink communication receiving terminal generates the first indication information.

Wherein, the first indication information is used to indicate the sidelink carrier and/or BWP recommended by the sidelink communication receiving terminal.

In some embodiments, the sidelink carrier and/or BWP recommended by the sidelink communication receiving terminal may specifically be the SL carrier and/or BWP currently available to the sidelink communication receiving terminal.

In other embodiments, the sidelink carrier and/or BWP recommended by the sidelink communication receiving terminal may specifically be the SL carrier and/or BWP supported by the capabilities of the sidelink communication receiving terminal.

In other embodiments, the sidelink carrier and/or BWP recommended by the sidelink communication receiving terminal may include: an intersection of the SL carrier and/or BWP currently available to the sidelink communication receiving terminal and the SL carrier and/or BWP supported by the capabilities of the sidelink communication receiving terminal.

The way for the sidelink communication receiving terminal to determine the SL carrier and/or BWP currently available to the sidelink communication receiving terminal may be executed by referring to the steps in S201, and it will not be elaborated here.

Step S302, the sidelink communication receiving terminal transmits the first indication information to the sidelink communication transmitting terminal.

In an optional embodiment, the sidelink communication receiving terminal may transmit the first indication information to the sidelink communication transmitting terminal through the sidelink interface.

Step S304, the sidelink communication transmitting terminal generates a third indication information based on the sidelink carriers and/or bandwidth parts recommended by the sidelink communication receiving terminal.

In some embodiments, the sidelink communication transmitting terminal may generate the third indication information based on the sidelink carriers and/or bandwidth parts recommended by the sidelink communication receiving terminal.

Step S304, the sidelink communication transmitting terminal transmits the third indication information to the network device.

In an optional embodiment, the sidelink communication transmitting terminal may transmit the third indication information to the network device, wherein the third indication information includes the sidelink carriers and/or bandwidth parts recommended by the sidelink communication receiving terminal.

Step S305, Based on the third indication information, the network device performs the selection or reselection of the sidelink carrier and/or BWP.

In an optional embodiment, in the case that the sidelink communication transmitting terminal is in a RRC connected state at the sidelink interface and uses a resource allocation mode scheduled by network, the network device selects the SL carrier and/or BWP for the sidelink communication transmitting terminal according to the content of the third indication information, and allocates SL transmission resources used by the sidelink communication transmitting terminal on the selected SL carrier and/or BWP. Among them, the SL transmission resources allocated by the network device on the selected SL carrier and/or BWP for the sidelink communication transmitting terminal to use are the specified time/frequency domain resources on the SL carrier and/or BWP used by the sidelink communication transmitting terminal when transmitting data at the sidelink interface.

The network device generates a fourth indication information including the SL carrier and/or BWP used by the sidelink communication transmitting terminal.

Step S306, The network device transmits the fourth indication information to the sidelink communication transmitting terminal.

The network device may transmit the fourth indication information to the sidelink communication transmitting terminal through the Uu interface; wherein, the fourth indication information includes the SL carrier and/or BWP used by the sidelink communication transmitting terminal.

Step S307, The sidelink communication transmitting terminal generates the fifth indication information based on the SL carrier and/or BWP used by the sidelink communication transmitting terminal.

Step S308, The sidelink communication transmitting terminal transmits the fifth indication information to the sidelink communication receiving terminal.

In an optional embodiment, the sidelink communication transmitting terminal may transmit the fifth indication information to the sidelink communication receiving terminal. After receiving the fifth indication information, the sidelink communication receiving terminal may determine the sidelink interface SL carrier and/or BWP to be monitored based on the fifth indication information.

In an optional embodiment, the sidelink communication transmitting terminal may also not execute the above steps S307 and S308.

In other embodiments, the sidelink communication transmitting terminal may transmit the content of the first indication information to the network device, and the network device will configure the resource pool on the sidelink carrier and/or BWP. The sidelink communication transmitting terminal may determine the candidate resources based on the resource pool configured by the network device.

Exemplarily, FIG. 4 shows an interactive flowchart of another method for determining sidelink communication resource provided by the embodiments of the present disclosure. As shown in FIG. 4, the method includes the following steps:
Step S401, The sidelink communication receiving terminal generates the first indication information.

Wherein, the first indication information is used to indicate the sidelink carrier and/or BWP recommended by the sidelink communication receiving terminal.

In some embodiments, the sidelink carrier and/or BWP recommended by the sidelink communication receiving terminal may specifically be the SL carrier and/or BWP currently available to the sidelink communication receiving terminal.

In other embodiments, the sidelink carrier and/or BWP recommended by the sidelink communication receiving terminal may specifically be the SL carrier and/or BWP supported by the capabilities of the sidelink communication receiving terminal.

In other embodiments, the sidelink carrier and/or BWP recommended by the sidelink communication receiving terminal may include: the SL carrier and/or BWP currently available to the sidelink communication receiving terminal, and the SL carrier and/or BWP supported by the capabilities of the sidelink communication receiving terminal.

The way for the sidelink communication receiving terminal to determine the SL carrier and/or BWP currently available to the sidelink communication receiving terminal may be executed by referring to the steps in S201, and it will not be elaborated here.

Step S402, The sidelink communication receiving terminal transmits the first indication information to the sidelink communication transmitting terminal.

In some embodiments, the sidelink communication receiving terminal may transmit the first indication information to the sidelink communication transmitting terminal through the sidelink interface.

Step S403, The sidelink communication transmitting terminal generates the third indication information based on the sidelink carrier and/or BWP recommended by the sidelink communication receiving terminal.

In some embodiments, the sidelink communication transmitting terminal may generate the third indication information based on the sidelink carrier and/or BWP recommended by the sidelink communication receiving terminal.

Step S404, The sidelink communication transmitting terminal transmits the third indication information to the network device.

The sidelink communication transmitting terminal may transmit the third indication information to the network device, wherein the third indication information includes the sidelink carrier and/or BWP recommended by the sidelink communication receiving terminal.

Step S405, Based on the third indication information, the network device configures a resource pool of the sidelink carrier and/or BWP.

In an optional embodiment, in the case that the sidelink communication transmitting terminal is in a RRC connected state at the Uu interface and uses the resource allocation mode selected by the terminal itself, the network device may configure a resource pool of the sidelink carrier and/or BWP based on the sidelink carrier and/or BWP recommended by the sidelink communication receiving terminal, and determine the resource pool of the sidelink carrier and/or BWP that may be used by the sidelink communication transmitting terminal at the sidelink interface, which may also be called the sidelink resource pool. The network device generates a sixth indication information based on configuration information of the resource pool of the sidelink carrier and/or BWP that may be used by the sidelink communication transmitting terminal at the sidelink interface.

Step S406, The network device transmits the sixth indication information to the sidelink communication transmitting terminal.

The network terminal may transmit the sixth indication information to the sidelink communication transmitting terminal through the Uu interface; wherein the sixth indication information includes the configuration information of the resource pool of the sidelink carrier and/or BWP that may be used by the sidelink communication transmitting terminal at the sidelink interface.

Step S407, The sidelink communication transmitting terminal performs the selection or reselection of the sidelink carrier and/or BWP based on the configuration information of the resource pool on the sidelink carrier and/or BWP that may be used at the sidelink interface.

In an optional embodiment, the sidelink communication transmitting terminal may determine a second intersection of the SL carrier and/or BWP supported by capabilities of the sidelink communication transmitting terminal, the SL carrier and/or BWP indicated in the first indication information, and the SL carrier and/or BWP of the sidelink resource pool configured by the network device, and take the SL carrier and/or BWP included in the second intersection as the candidate resources when performing the selection or reselection of the SL carrier and/or BWP.

Exemplarily, in the case that the candidate resources described above are licensed spectrum, the sidelink communication transmitting terminal may perform the selection or reselection of the SL carrier and/or BWP based on the CBR or SL-CSI of the licensed spectrum. In the case that the candidate resources described above are unlicensed spectrum, the selection or reselection of the SL carrier and/or BWP is performed based on the RSSI or CO on the unlicensed spectrum, and then the SL carrier and/or BWP of the sidelink interface used by the sidelink communication transmitting terminal is determined.

Step S408, The sidelink communication transmitting terminal transmits a seventh indication information to the sidelink communication receiving terminal.

In some embodiments, the sidelink communication transmitting terminal may generate the seventh indication information based on the sidelink interface SL carrier and/or BWP used by the sidelink communication transmitting terminal. The sidelink communication transmitting terminal may transmit the seventh indication information to the sidelink communication receiving terminal through the sidelink interface. After receiving the seventh indication information, the sidelink communication receiving terminal may determine the sidelink interface SL carrier and/or BWP to be monitored based on the seventh indication information.

The above step S408 is an optional step. In some embodiments, the sidelink communication transmitting terminal may also not execute the above step S408.

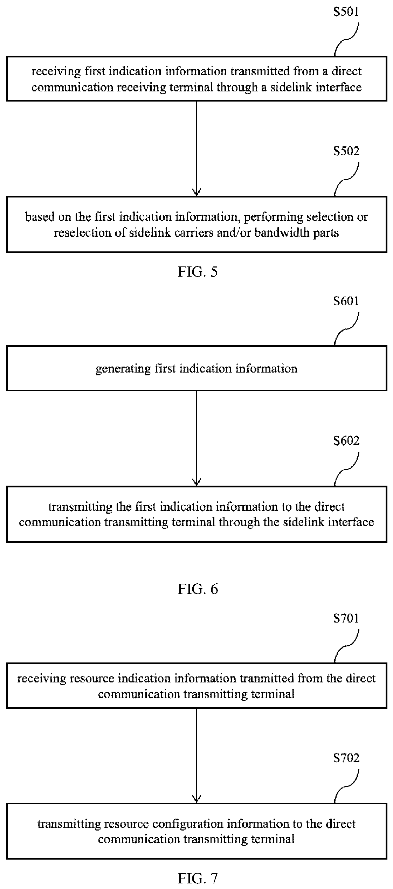

Based on the same inventive concept, the embodiments of the present disclosure provide a method for determining sidelink resources, which may be applied to the sidelink communication transmitting terminal. As shown in FIG. 5, the method includes the following steps:
Step S501: Receiving a first indication information transmitted by the sidelink communication receiving terminal through the sidelink interface;

The first indication information is used to indicate the sidelink carriers and/or bandwidth parts recommended by the sidelink communication receiving terminal.

Step S502: Based on the first indication information, performing the selection or reselection of the sidelink carriers and/or bandwidth parts.

Based on the same inventive concept, the embodiments of the present disclosure also provide another method for determining sidelink resources, which may be applied to the sidelink communication receiving terminal. As shown in FIG. 6, the method includes the following steps:
Step S601, Generating a first indication information, wherein the first indication information is used to indicate the sidelink carriers and/or bandwidth parts recommended by the sidelink communication receiving terminal.
Step S602, Transmitting the first indication information to the sidelink communication transmitting terminal through the sidelink interface.

Based on the same inventive concept, the embodiments of the present disclosure also provide another method for determining sidelink resources, which may be applied to network devices. As shown in FIG. 7, the method includes the following steps:
Step S701, Receiving resource indication information transmitted from the sidelink communication transmitting terminal; the resource indication information includes the sidelink carriers and/or bandwidth parts recommended by the sidelink communication receiving terminal; the sidelink communication receiving terminal and the sidelink communication transmitting terminal communicate with each other through the sidelink interface.
Step S702, transmitting resource configuration information to the sidelink communication transmitting terminal.

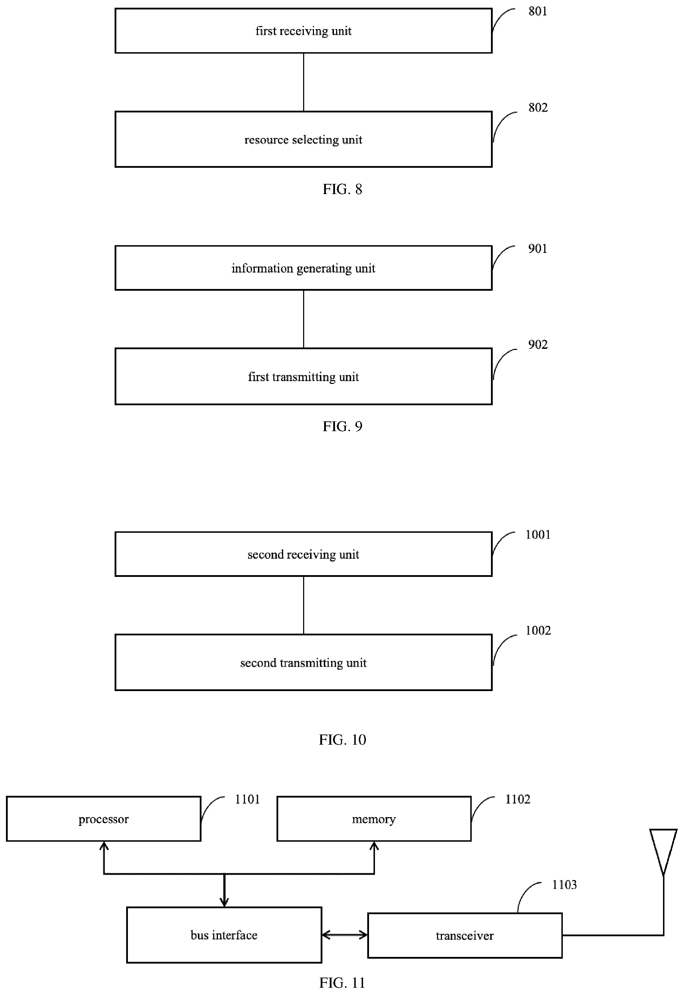

Based on the same inventive concept, the embodiments of the present disclosure also provide a sidelink communication transmitting terminal device. As shown in FIG. 8, sidelink communication transmitting terminal device includes a first receiving unit 801 and a resource selecting unit 802; wherein:
The first receiving unit 801 is used to receive a first indication information transmitted by the sidelink communication receiving terminal through the sidelink interface. The first indication information is used to indicate the sidelink carriers and/or bandwidth parts recommended by the sidelink communication receiving terminal.

The resource selecting unit 802 is used to perform the selection or reselection of the sidelink carriers and/or bandwidth parts based on the first indication information.

In an optional embodiment, the sidelink carriers and/or bandwidth parts recommended by the sidelink communication receiving terminal includes at least one of the following:
the sidelink carriers and/or bandwidth parts currently available to the sidelink communication receiving terminal;
the sidelink carriers and/or bandwidth parts supported by the capabilities of the sidelink communication receiving terminal.

In an optional embodiment, the resource selecting unit 802 may be specifically used for:
Determining a first intersection of the sidelink carriers and/or bandwidth parts supported by the capabilities of the sidelink communication transmitting terminal and the sidelink carriers and/or bandwidth parts indicated in the first indication information, and taking the sidelink carriers and/or bandwidth parts included in the first intersection as candidate resources when the sidelink communication transmitting terminal performs the selection or reselection of the sidelink carriers and/or bandwidth parts; or,
Determining a second intersection of the sidelink carriers and/or bandwidth parts supported by the capabilities of the sidelink communication transmitting terminal, the sidelink carriers and/or bandwidth parts indicated in the first indication information, and the sidelink carriers and/or bandwidth parts of the sidelink resource pool configured by the network device, and taking the sidelink carriers and/or bandwidth parts included in the second intersection as the candidate resources when the sidelink communication transmitting terminal performs the selection or reselection of the sidelink carriers and/or bandwidth parts;
Wherein, the network device is a network device that serves the sidelink communication transmitting terminal.

In an optional embodiment, the resource selecting unit 802 may also be used for: in the case that the candidate resources are licensed spectrum, performing the selection or reselection of the sidelink carriers and/or bandwidth parts based on the CBR or SL-CSI of the licensed spectrum;
In the case that the candidate resources are unlicensed spectrum, performing the selection or reselection of the sidelink carriers and/or bandwidth parts based on the RSSI or CO on the unlicensed spectrum.

In an optional embodiment, the resource selecting unit 802 may specifically be used for:
In the case that the sidelink communication transmitting terminal is in the RRC connected state at the Uu interface, or in the case that the sidelink communication transmitting terminal is in the RRC connected state at the Uu interface and uses the resource allocation mode scheduled by network, the sidelink communication transmitting terminal may transmit the sidelink carriers and/or bandwidth parts recommended by the sidelink communication receiving terminal as the resource indication information to the network device that serves the sidelink communication transmitting terminal, receive resource configuration information transmitted from the network device, and determine the sidelink carriers and/or bandwidth parts used by the sidelink communication transmitting terminal according to the resource configuration information.

In an optional embodiment, after performing the selection or reselection of the sidelink carriers and/or bandwidth parts based on the first indication information, the resource selecting unit 802 may also be configured to:
transmit a second indication information to the sidelink communication receiving terminal through the sidelink interface; the second indication information includes the sidelink carriers and/or bandwidth parts available to the sidelink communication transmitting terminal at the sidelink interface, or the sidelink carriers and/or bandwidth parts available to the sidelink communication transmitting terminal when transmitting data to the sidelink communication receiving terminal at the sidelink interface.

Based on the same inventive concept, the embodiments of the present disclosure also provide a sidelink communication transmitting terminal device. As shown in FIG. 9, the sidelink communication transmitting terminal device includes an information generating unit 901 and a first transmitting unit 902; wherein:
The information generating unit 901 is used to generate the first indication information, wherein the first indication information is used to indicate the sidelink carriers and/or bandwidth parts recommended by a sidelink communication receiving terminal.

The first transmitting unit 902 is used to transmit the first indication information to the sidelink communication transmitting terminal through the sidelink interface.

In an optional embodiment, the sidelink carriers and/or bandwidth parts recommended by the sidelink communication receiving terminal includes at least one of the following:
the sidelink carriers and/or bandwidth parts currently available to the sidelink communication receiving terminal;
the sidelink carriers and/or bandwidth parts supported by the capabilities of the sidelink communication receiving terminal.

In an optional embodiment, in the case that the sidelink carriers and/or bandwidth parts recommended by the sidelink communication receiving terminal includes the sidelink carriers and/or bandwidth parts currently available to the sidelink communication receiving terminal, the information generating unit 901 may determine the sidelink carriers and/or bandwidth parts currently available to the sidelink communication receiving terminal in any of the following ways:
Determining the sidelink carriers and/or bandwidth parts currently available to the sidelink communication receiving terminal according to carrier capability information of the sidelink communication receiving terminal and/or channel quality on each carrier;
Determining the sidelink carriers and/or bandwidth parts currently available to the sidelink communication receiving terminal according to the carrier capability information of the sidelink communication receiving terminal and/or interference situation on each carrier;
Taking the sidelink carriers and/or bandwidth parts that satisfies a first set condition as the sidelink carriers and/or bandwidth parts currently available to the sidelink communication receiving terminal. The first set condition includes any one or combination of the following conditions:
CBR corresponding to the sidelink carriers and/or bandwidth parts is lower than a CBR threshold;
RSRP corresponding to the sidelink carriers and/or bandwidth parts is lower than a RSRP threshold;
RSSI corresponding to the sidelink carriers and/or bandwidth parts is lower than a RSSI threshold;
CO corresponding to the sidelink carriers and/or bandwidth parts is lower than a CO threshold;
the sidelink carriers and/or bandwidth parts supported by both the sidelink communication transmitting terminal and the sidelink communication receiving terminal.

In an optional embodiment, the terminal may also include an information monitoring unit, and the information monitoring unit may specifically be used to:
After transmitting the first indication information to the sidelink communication transmitting terminal through the sidelink interface, receiving a second indication information transmitted from the sidelink communication transmitting terminal through the sidelink interface; determining the sidelink carriers and/or bandwidth parts to be monitored based on the second indication information. Wherein, the second indication information includes the sidelink carriers and/or bandwidth parts used by the sidelink communication transmitting terminal.

Based on the same inventive concept, the embodiments of the present disclosure also provide a network device. As shown in Figure 10, it includes a second receiving unit 1001 and a second transmitting unit 1002; wherein:
The second receiving unit 1001 is used to receive the resource indication information transmitted from the sidelink communication transmitting terminal. The resource indication information includes the sidelink carriers and/or bandwidth parts recommended by the sidelink communication receiving terminal. The sidelink communication receiving terminal and the sidelink communication transmitting terminal communicate with each other through the sidelink interface.

The second transmitting unit 1002 is used to transmit the resource configuration information to the sidelink communication transmitting terminal.

In an optional embodiment, if the sidelink communication transmitting terminal is in the RRC connected state at the Uu interface and uses the resource allocation mode selected by the terminal itself, then the resource configuration information includes the configuration information of the resource pool on the sidelink carriers and/or bandwidth parts that may be used by the sidelink communication transmitting terminal at the sidelink interface; or,
If the sidelink communication transmitting terminal is in the RRC connected state at the Uu interface and uses the network-scheduled resource allocation mode, then the resource configuration information includes the transmission resources on the sidelink carriers and/or bandwidth parts that may be used by the sidelink communication transmitting terminal at the sidelink interface.

Based on the same inventive concept, the present disclosure also provides a sidelink communication receiving terminal. FIG. 11 shows a schematic structural diagram of the sidelink communication receiving terminal provided by the embodiments of the present disclosure. As shown in FIG. 11, the device includes a processor 1101, a memory 1102, and a transceiver 1103.

The processor 1101 is responsible for managing the bus architecture and general processing. The memory 1102 may store the data used by the processor 1101 during operation. The transceiver 1103 is used to receive and transmit data under the control of the processor 1101.

The bus architecture may include any number of interconnected buses and bridges, specifically linking together various circuits represented by one or more processors represented by the processor 1101 and the memory represented by the memory 1102. The bus architecture may also link together various other circuits such as peripheral devices, voltage regulators, and power management circuits, which are well-known in the art and will not be further described herein. The bus interface provides an interface. The processor 1101 is responsible for managing the bus architecture and general processing, and the memory 1102 may store the data used by the processor 1101 during operation.

The processes disclosed in the embodiments of the present disclosure may be applied to or implemented by the processor 1101. During the process of the implementation, each step of the signal processing process may be completed by the integrated logic circuit of the hardware in the processor 1101 or by instructions in the form of software. The processor 1101 may be a general processor, a digital signal processor, an application-specific integrated circuit, a field-programmable gate array, or other programmable logic devices, discrete gate or transistor logic devices, discrete hardware components, and may implement or execute the various methods, steps, and logic block diagrams disclosed in the embodiments of the present disclosure. The general processor may be a microprocessor or any conventional processor, etc. The steps of the methods disclosed in combination with the embodiments of the present disclosure may be directly embodied as being completed by the execution of a hardware processor, or completed by the combination of hardware and software modules in the processor. The software modules may be located in mature storage media in the art such as random access memory, flash memory, read-only memory, programmable read-only memory, or electrically erasable programmable memory, registers, etc. The storage medium is located in the memory 1102, and the processor 1101 reads the information in the memory 1102 and combines its hardware to complete the steps of the signal processing process.

Specifically, the processor 1101 is used to read the computer program in the memory 1102 and execute the following steps:
Controlling the transceiver 1103 to receive a first indication information transmitted from the sidelink communication receiving terminal through the sidelink interface, and based on the first indication information, performing selection or reselection of the sidelink carriers and/or bandwidth parts. The first indication information is used to indicate the sidelink carriers and/or bandwidth parts recommended by the sidelink communication receiving terminal.

In an optional embodiment, the sidelink carriers and/or bandwidth parts recommended by the sidelink communication receiving terminal includes at least one of the following:
the sidelink carriers and/or bandwidth parts currently available to the sidelink communication receiving terminal;
the sidelink carriers and/or bandwidth parts supported by capabilities of the sidelink communication receiving terminal.

In an optional embodiment, the processor 1101 is specifically used for:
Determining a first intersection of the sidelink carriers and/or bandwidth parts supported by the capabilities of the sidelink communication transmitting terminal and the sidelink carriers and/or bandwidth parts indicated in the first indication information, and taking sidelink carriers and/or bandwidth parts included in the first intersection as candidate resources when the sidelink communication transmitting terminal performs the selection or reselection of the sidelink carriers and/or bandwidth parts; or,
Determining a second intersection of the sidelink carriers and/or bandwidth parts supported by the capabilities of the sidelink communication transmitting terminal, the sidelink carriers and/or bandwidth parts indicated in the first indication information, and the sidelink carriers and/or bandwidth parts of the sidelink resource pool configured by the network device, and taking sidelink carriers and/or bandwidth parts included in the second intersection as candidate resources when the sidelink communication transmitting terminal performs the selection or reselection of the sidelink carriers and/or bandwidth parts;
Wherein, the network device is the network device that serves the sidelink communication transmitting terminal.

In an optional embodiment, the processor 1101 is further used for: in the case that the candidate resources are licensed spectrum, performing the selection or reselection of the sidelink carriers and/or bandwidth parts based on the CBR or SL-CSI of the licensed spectrum;
In the case that the candidate resources are unlicensed spectrum, performing the selection or reselection of the sidelink carriers and/or bandwidth parts based on the RSSI or CO on the unlicensed spectrum.

In an optional embodiment, the processor 1101 is specifically used for:
in the case that the sidelink communication transmitting terminal is in the RRC connected state at the Uu interface, or in the case that the sidelink communication transmitting terminal is in the RRC connected state at the Uu interface and uses the resource allocation mode scheduled by network, transmitting the sidelink carriers and/or bandwidth parts recommended by the sidelink communication receiving terminal as the resource indication information to the network device that serves the sidelink communication transmitting terminal through the transceiver 1103, and receiving resource configuration information transmitted from the network device through the transceiver 1103, and determining the sidelink carriers and/or bandwidth parts used by the sidelink communication transmitting terminal according to the resource configuration information.

In an optional embodiment, the processor 1103 is specifically used for:
transmitting a second indication information to the sidelink communication receiving terminal through the transceiver 1103; the second indication information includes the sidelink carriers and/or bandwidth parts available to the sidelink communication transmitting terminal at the sidelink interface, or the sidelink carriers and/or bandwidth parts available to the sidelink communication transmitting terminal when transmitting data to the sidelink communication receiving terminal at the sidelink interface.

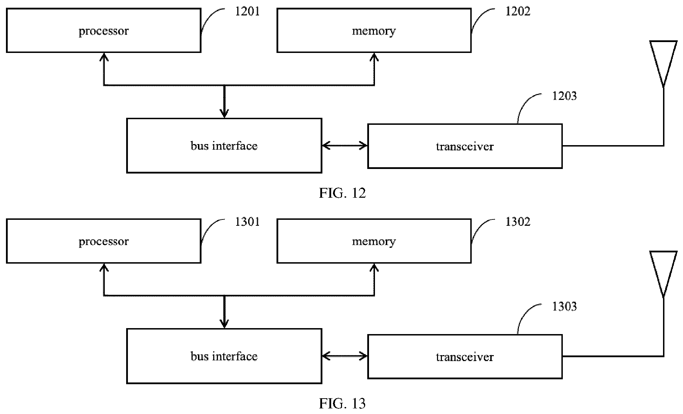

Based on the same inventive concept, the present disclosure also provides a sidelink communication receiving terminal. FIG. 12 shows a schematic structural diagram of the sidelink communication receiving terminal provided by the embodiments of the present disclosure. As shown in FIG. 12, the terminal includes a processor 1201, a memory 1202, and a transceiver 1203.

Specifically, the processor 1201 is used to read the computer program in the memory 1202 and execute the following steps:

Generating a first indication information, wherein the first indication information is used to indicate the sidelink carriers and/or bandwidth parts recommended by the sidelink communication receiving terminal; controlling the transceiver 1203 to transmit the first indication information to a sidelink communication transmitting terminal through the sidelink interface.

In an optional embodiment, the sidelink carriers and/or bandwidth parts recommended by the sidelink communication receiving terminal includes at least one of the following:
the sidelink carriers and/or bandwidth parts currently available to the sidelink communication receiving terminal;
the sidelink carriers and/or bandwidth parts supported by the capabilities of the sidelink communication receiving terminal.

In an optional embodiment, in the case that the sidelink carriers and/or bandwidth parts recommended by the sidelink communication receiving terminal includes the sidelink carriers and/or bandwidth parts currently available to the sidelink communication receiving terminal, the processor 1201 is specifically used for:
Determining the sidelink carriers and/or bandwidth parts currently available to the sidelink communication receiving terminal in any of the following ways:
Determining the sidelink carriers and/or bandwidth parts currently available to the sidelink communication receiving terminal according to carrier capability information of the sidelink communication receiving terminal and/or channel quality on each carrier;
Determining the sidelink carriers and/or bandwidth parts currently available to the sidelink communication receiving terminal according to carrier capability information of the sidelink communication receiving terminal and/or interference situation on each carrier;
Taking the sidelink carriers and/or bandwidth parts that satisfies a first set condition as the sidelink carriers and/or bandwidth parts currently available to the sidelink communication receiving terminal. The first set condition includes any one or combination of the following conditions:
   CBR corresponding to the sidelink carriers and/or bandwidth parts is lower than a CBR threshold;
   RSRP corresponding to the sidelink carriers and/or bandwidth parts is lower than a RSRP threshold;
   RSSI corresponding to the carrier and/or bandwidth part of the the sidelink interface is lower than a RSSI threshold;
   CO corresponding to the sidelink carriers and/or bandwidth parts is lower than a CO threshold;
   the sidelink carriers and/or bandwidth parts supported by both the sidelink communication transmitting terminal and the sidelink communication receiving terminal.

In an optional embodiment, the processor 1201 is further used for:
Controlling the transceiver 1203 to receive a second indication information transmitted by the sidelink communication transmitting terminal through the sidelink interface; the second indication information includes the sidelink carriers and/or bandwidth parts used by the sidelink communication transmitting terminal;
Based on the second indication information, determining sidelink carriers and/or bandwidth parts to be monitored.

Based on the same inventive concept, the present disclosure also provides a network device. FIG. 13 shows a schematic structural diagram of the network device provided by the embodiments of the present disclosure. As shown in FIG. 13, the network device includes a processor 1301, a memory 1302, and a transceiver 1303.

Specifically, under the control of the processor 1301, the transceiver 1303 is used to: receive resource indication information transmitted from a sidelink communication transmitting terminal; the resource indication information includes the sidelink carriers and/or bandwidth parts recommended by the sidelink communication receiving terminal; the sidelink communication receiving terminal and the sidelink communication transmitting terminal communicate with each other through the sidelink interface;
transmit the resource configuration information to the sidelink communication transmitting terminal.

In an optional embodiment, in the case that the sidelink communication transmitting terminal is in the RRC connected state at the Uu interface and uses the resource allocation mode selected by terminal itself, the resource configuration information includes the configuration information of the resource pool on the sidelink carriers and/or bandwidth parts that may be used by the sidelink communication transmitting terminal at the sidelink interface; or,
In the case that the sidelink communication transmitting terminal is in the RRC connected state at the Uu interface and uses the resource allocation mode scheduled by network, then the resource configuration information includes the transmission resources on the sidelink carriers and/or bandwidth parts that may be used by the sidelink communication transmitting terminal at the sidelink interface.

The embodiments of the present disclosure also provide a computer-readable storage medium for the method for determining sidelink resources. The storage medium stores software programs, including program code. When the program code runs on a computing device, the software program may implement the scheme of any of the above methods for determining sidelink resources in the embodiments of the present disclosure when read and executed by one or more processors.

Those skilled in the art should understand that the embodiments of the present disclosure may be provided as methods, systems, or computer program products. Therefore, the present disclosure may take the form of a completely hardware embodiment, a completely software embodiment, or an embodiment combining software and hardware aspects. Moreover, the present disclosure may take the form of a computer program product implemented on one or more computer-usable storage media (including but not limited to disk storage, CD-ROM, optical storage, etc.) that contain computer-usable program code.

the present disclosure is described with reference to the flowcharts and/or block diagrams of the methods, devices (systems), and computer program products according to the present disclosure. It should be understood that each process and/or block in the flowcharts and/or block diagrams, as well as the combination of processes and/or blocks in the flowcharts and/or block diagrams, may be implemented by computer program instructions. These computer program instructions may be provided to the processors of general-purpose computers, special-purpose computers, embedded processors, or other programmable data processing devices to generate a machine, such that the instructions executed by the processors of the computer or other programmable data processing devices generate means for implementing the functions specified in one or more processes of the flowchart and/or one or more blocks of the block diagram.

The computer program instructions may also be stored in a computer-readable memory that may guide the computer or other programmable data processing device to work in a specific way, such that the instructions stored in the computer-readable memory generate an article of manufacture including an instruction means that implements the functions specified in one or more processes of the flowchart and/or one or more blocks of the block diagram.

The computer program instructions may also be loaded onto a computer or other programmable data processing device, such that a series of operation steps are executed on the computer or other programmable device to generate a computer-implemented process, and thus the instructions executed on the computer or other programmable device provide steps for implementing the functions specified in one or more processes of the flowchart and/or one or more blocks of the block diagram.

Obviously, those skilled in the art may make various modifications and variations to the present disclosure without departing from the spirit and scope of the present disclosure. Thus, if these modifications and variations of the present disclosure fall within the scope of the claims of the present disclosure and their equivalent technologies, the present disclosure also intends to include these modifications and variations.

## Claims

1. A method for determining sidelink resource, applied to a sidelink communication transmitting terminal, **characterized by** comprising:
receiving first indication information transmitted from a sidelink communication receiving terminal through a sidelink interface, wherein the first indication information is used to indicate one or more sidelink carriers and/or bandwidth parts recommended by the sidelink communication receiving terminal;
performing selection or re-selection of the sidelink carriers and/or bandwidth parts based on the first indication information.

2. the method according to claim 1, **characterized in that** the sidelink carriers and/or bandwidth parts recommended by the sidelink communication receiving terminal comprises at least one of the following:
the sidelink carriers and/or bandwidth parts currently available to the sidelink communication receiving terminal; or
the sidelink carriers and/or bandwidth parts supported by capabilities of the sidelink communication receiving terminal.

3. the method according to claim 1, **characterized in that** performing selection or re-selection of the sidelink carriers and/or bandwidth parts based on the first indication information comprises:
determining a first intersection of the sidelink carriers and/or bandwidth parts supported by capabilities of the sidelink communication transmitting terminal and the sidelink carriers and/or bandwidth parts indicated by the first indication information, and taking the sidelink carriers and/or bandwidth parts comprised in the first intersection as a candidate resource when the sidelink communication transmitting terminal performs selection or re-selection of the sidelink carriers and/or bandwidth parts; or
determining a second intersection between the sidelink carriers and/or bandwidth parts supported by capabilities of the sidelink communication transmitting terminal, the sidelink carriers and/or bandwidth parts indicated by the first indication information and the sidelink carriers and/or bandwidth parts in a sidelink resource pool configured by a network device, and taking the sidelink carriers and/or bandwidth parts comprised in the second intersection as the candidate resource when the sidelink communication transmitting terminal performs selection or re-selection of the sidelink carriers and/or bandwidth parts;
wherein the network device is a network device that serves the sidelink communication transmitting terminal.

4. the method according to claim 3, **characterized in that** the method further comprises:
in the case that the candidate resource is licensed spectrum, performing selection or re-selection of the sidelink carriers and/or bandwidth parts based on a channel busy radio (CBR) or an sidelink interface channel statement information (SL-CSI) on the licensed spectrum;
in the case that the candidate resource is unlicensed spectrum, performing selection or re-selection of the sidelink carriers and/or bandwidth parts based on received signal strength indication (RSSI) or channel occupation (CO) on the unlicensed spectrum.

5. the method according to claim 1, **characterized in that** performing selection or re-selection of the sidelink carriers and/or bandwidth parts based on the first indication information comprises:
in the case that the sidelink communication transmitting terminal is in radio resource control (RRC) connected state at an Uu interface, or in the case that the sidelink communication transmitting terminal is in RRC connected state at the Uu interface and uses a resource allocation mode scheduled by network, transmitting, by the sidelink communication transmitting terminal, the sidelink carriers and/or bandwidth parts recommended by the sidelink communication receiving terminal as a resource indication information to a network device that serves the sidelink communication transmitting terminal, and receiving resource configuration information transmitted from the network device, determining the sidelink carriers and/or bandwidth parts to be used by the sidelink communication transmitting device based on the resource configuration information.

6. the method according to any one of claims 1-5, **characterized in that** the method further comprises:
transmitting second indication information to the sidelink communication receiving terminal through the sidelink interface; wherein the second indication information comprises sidelink carriers and/or bandwidth parts available to the sidelink communication transmitting terminal at the sidelink interface; or sidelink carriers and/or bandwidth parts available to the sidelink communication transmitting terminal when performing data transmission to the sidelink communication receiving terminal at the sidelink interface.

7. A method for determining sidelink resource, applied to a sidelink communication receiving terminal, **characterized by** comprising:
generating first indication information, wherein the first indication information is used to indicate one or more sidelink carriers and/or bandwidth parts recommended by the sidelink communication receiving terminal;
transmitting the first indication information to a sidelink communication transmitting terminal through a sidelink interface.

8. the method according to claim 7, **characterized in that** the sidelink carriers and/or bandwidth parts recommended by the sidelink communication receiving terminal comprises at least one of the following:
the sidelink carriers and/or bandwidth parts currently available to the sidelink communication receiving terminal; or
the sidelink carriers and/or bandwidth parts supported by capabilities of the sidelink communication receiving terminal.

9. the method according to claim 8, **characterized in that** in the case that the sidelink carriers and/or bandwidth parts recommended by the sidelink communication receiving terminal comprises the sidelink carriers and/or bandwidth parts currently available to the sidelink communication receiving terminal, determining, by the sidelink communication receiving terminal, the bandwidth part currently available to the sidelink communication receiving terminal through any one scheme of following:
determining the sidelink carriers and/or bandwidth parts currently available to the sidelink communication receiving terminal based on carrier capability information of the sidelink communication receiving terminal and/or channel quality on each carrier;
determining the sidelink carriers and/or bandwidth parts currently available to the sidelink communication receiving terminal based on the carrier capability information of the sidelink communication receiving terminal and/or interference situation on each carrier;
taking the sidelink carriers and/or bandwidth parts which satisfies a first set condition as the sidelink carriers and/or bandwidth parts currently available to the sidelink communication receiving terminal; wherein the first set condition comprises any one or a combination of the following conditions:
channel busy ratio (CBR) corresponding to the sidelink carriers and/or bandwidth parts is lower than a CBR threshold;
reference signal receiving power (RSRP) corresponding to the sidelink carriers and/or bandwidth parts is lower than an RSRP threshold;
receiving signal strength indicator (RSSI) corresponding to the sidelink carriers and/or bandwidth parts is lower than an RSSI threshold;
channel occupation (CO) corresponding to the sidelink carriers and/or bandwidth parts is lower than a CO threshold;
the sidelink carriers and/or bandwidth parts supported by both the sidelink communication transmitting terminal and the sidelink communication receiving terminal.

10. the method according to any one of claims 7-9, **characterized in that** the method further comprises:
receiving second indication information transmitted from the sidelink communication transmitting terminal through the sidelink interface; wherein the second indication information comprises sidelink carriers and/or bandwidth parts available to the sidelink communication transmitting terminal at the sidelink interface; or sidelink carriers and/or bandwidth parts available to the sidelink communication transmitting terminal when performing data transmission to the sidelink communication receiving terminal at the sidelink interface;
determining the sidelink carriers and/or bandwidth parts to be monitored based on the second indication information.

11. A method for determining a sidelink resource, applied to a network device, **characterized by** comprising:
receiving resource indication information transmitted from a sidelink communication transmitting terminal, wherein the resource indication information comprises one or more sidelink carriers and/or bandwidth parts recommended by a sidelink communication receiving terminal; the sidelink communication receiving terminal communicates with the sidelink communication transmitting terminal directly;
transmitting resource configuration information to the sidelink communication transmitting terminal.

12. the method according to claim 11, **characterized in that**,
in the case that the sidelink communication transmitting terminal is in radio resource control (RRC) connected state at an Uu interface and uses a resource allocation mode selected by terminal itself, the resource configuration information comprises resource pool configuration information on the sidelink carrier and/or the bandwidth available to the sidelink communication transmitting terminal at the sidelink interface;
in the case that the sidelink communication transmitting terminal is in radio resource control (RRC) connected state at an Uu interface and uses a resource allocation mode scheduled by network, the resource configuration information comprises transmission resource on the sidelink carrier and/or the bandwidth available to the sidelink communication transmitting terminal at the sidelink interface.

13. A terminal, wherein the terminal is a sidelink communication transmitting terminal, **characterized by** comprising:
a first receiving unit, configured to receive first indication information transmitted from a sidelink communication receiving terminal through a sidelink interface, wherein the first indication information is used to indicate one or more sidelink carriers and/or bandwidth parts recommended by the sidelink communication receiving terminal;
a resource selecting unit, configured to perform selection or re-selection of the sidelink carriers and/or bandwidth parts based on the first indication information.

14. the terminal according to claim 13, **characterized in that** the sidelink carriers and/or bandwidth parts recommended by the sidelink communication receiving terminal comprises at least one of the following:
the sidelink carriers and/or bandwidth parts currently available to the sidelink communication receiving terminal; or
the sidelink carriers and/or bandwidth parts supported by capabilities of the sidelink communication receiving terminal.

15. the terminal according to claim 13, **characterized in that** the resource selecting unit is configured to:
determine a first intersection of the sidelink carriers and/or bandwidth parts supported by capabilities of the sidelink communication transmitting terminal and the sidelink carriers and/or bandwidth parts indicated by the first indication information, and take the sidelink carriers and/or bandwidth parts comprised in the first intersection as a candidate resource when the sidelink communication transmitting terminal performs selection or re-selection of the sidelink carriers and/or bandwidth parts; or
determine a second intersection between the sidelink carriers and/or bandwidth parts supported by capabilities of the sidelink communication transmitting terminal, the sidelink carriers and/or bandwidth parts indicated by the first indication information and the sidelink carriers and/or bandwidth parts in a sidelink resource pool configured by a network device, and take the sidelink carriers and/or bandwidth parts comprised in the second intersection as the candidate resource when the sidelink communication transmitting terminal performs selection or re-selection of the sidelink carriers and/or bandwidth parts;
wherein the network device is a network device that serves the sidelink communication transmitting terminal.

16. the terminal according to claim 15, **characterized in that** the resource selecting unit is configured to:
in the case that the candidate resource is licensed spectrum, perform selection or re-selection of the sidelink carriers and/or bandwidth parts based on a channel busy radio (CBR) or an side link channel statement information (SL-CSI) on the licensed spectrum;
in the case that the candidate resource is unlicensed spectrum, perform selection or re-selection of the sidelink carriers and/or bandwidth parts based on received signal strength indication (RSSI) or channel occupation (CO) on the unlicensed spectrum.

17. the terminal according to claim 13, **characterized in that** the resource selecting unit is configured to:
in the case that the sidelink communication transmitting terminal is in radio resource control (RRC) connected state at an Uu interface, or in the case that the sidelink communication transmitting terminal is in RRC connected state at the Uu interface and uses a resource allocation mode scheduled by network, transmit, by the sidelink communication transmitting terminal, the sidelink carriers and/or bandwidth parts recommended by the sidelink communication receiving terminal as a resource indication information to a network device that serves the sidelink communication transmitting terminal, and receive resource configuration information transmitted from the network device, determine the sidelink carriers and/or bandwidth parts to be used by the sidelink communication transmitting device based on the resource configuration information.

18. the terminal according to any one of claims 13 to 17, **characterized in that** the resource selecting unit is configured to:
transmit second indication information to the sidelink communication receiving terminal through the sidelink interface; wherein the second indication information comprises sidelink carriers and/or bandwidth parts available to the sidelink communication transmitting terminal at the sidelink interface; or sidelink carriers and/or bandwidth parts available to the sidelink communication transmitting terminal when performing data transmission to the sidelink communication receiving terminal at the sidelink interface.

19. A terminal, wherein the terminal is a sidelink communication receiving terminal, **characterized by** comprising:
an information generating unit, configured to generate first indication information, wherein the first indication information is used to indicate one or more sidelink carriers and/or bandwidth parts recommended by the sidelink communication receiving terminal;
a first transmitting unit, configured to transmit the first indication information to a sidelink communication transmitting terminal through a sidelink interface.

20. the terminal according to claim 18, **characterized in that** the sidelink carriers and/or bandwidth parts recommended by the sidelink communication receiving terminal comprises at least one of the following:
the sidelink carriers and/or bandwidth parts currently available to the sidelink communication receiving terminal; or
the sidelink carriers and/or bandwidth parts supported by capabilities of the sidelink communication receiving terminal.

21. the terminal according to claim 20, **characterized in that** in the case that the sidelink carriers and/or bandwidth parts recommended by the sidelink communication receiving terminal comprises the sidelink carriers and/or bandwidth parts currently available to the sidelink communication receiving terminal, the information generating unit determines the bandwidth part currently available to the sidelink communication receiving terminal through any one scheme of following:
determining the sidelink carriers and/or bandwidth parts currently available to the sidelink communication receiving terminal based on carrier capability information of the sidelink communication receiving terminal and/or channel quality on each carrier;
determining the sidelink carriers and/or bandwidth parts currently available to the sidelink communication receiving terminal based on the carrier capability information of the sidelink communication receiving terminal and/or interference situation on each carrier;
taking the sidelink carriers and/or bandwidth parts which satisfies a first set condition as the sidelink carriers and/or bandwidth parts currently available to the sidelink communication receiving terminal; wherein the first set condition comprises any one or a combination of the following conditions:
channel busy ratio (CBR) corresponding to the sidelink carriers and/or bandwidth parts is lower than a CBR threshold;
reference signal receiving power (RSRP) corresponding to the sidelink carriers and/or bandwidth parts is lower than an RSRP threshold;
receiving signal strength indicator (RSSI) corresponding to the sidelink carriers and/or bandwidth parts is lower than an RSSI threshold;
channel occupation (CO) corresponding to the sidelink carriers and/or bandwidth parts is lower than a CO threshold;
the sidelink carriers and/or bandwidth parts supported by both the sidelink communication transmitting terminal and the sidelink communication receiving terminal.

22. the terminal according to any one of claims 19 to 21, **characterized in that** the terminal further comprises a second indication information receiving unit, wherein the second indication information receiving unit is configured to receive second indication information transmitted from the sidelink communication transmitting terminal through the sidelink interface; wherein the second indication information comprises sidelink carriers and/or bandwidth parts available to the sidelink communication transmitting terminal at the sidelink interface; or sidelink carriers and/or bandwidth parts available to the sidelink communication transmitting terminal when performing data transmission to the sidelink communication receiving terminal at the sidelink interface;
the second indication information receiving unit is further configured to determine the sidelink carriers and/or bandwidth parts to be monitored based on the second indication information.

23. A network device, **characterized by** comprising:
a second receiving unit, configured to receive resource indication information transmitted from a sidelink communication transmitting terminal, wherein the resource indication information comprises one or more sidelink carriers and/or bandwidth parts recommended by a sidelink communication receiving terminal; the sidelink communication receiving terminal communicates with the sidelink communication transmitting terminal directly;
a second transmitting unit, configured to transmit the resource configuration information to the sidelink communication transmitting terminal.

24. the network device according to claim 23, **characterized in that**,
in the case that the sidelink communication transmitting terminal is in radio resource control (RRC) connected state at an Uu interface and uses a resource allocation mode selected by terminal itself, the resource configuration information transmitted from the second transmitting unit comprises resource pool configuration information on the sidelink carrier and/or the bandwidth available to the sidelink communication transmitting terminal at the sidelink interface;
in the case that the sidelink communication transmitting terminal is in radio resource control (RRC) connected state at an Uu interface and uses a resource allocation mode scheduled by network, the resource configuration information transmitted from the second transmitting unit comprises transmission resource on the sidelink carrier and/or the bandwidth available to the sidelink communication transmitting terminal at the sidelink interface.

25. A terminal, wherein the terminal is a sidelink communication transmitting terminal, **characterized by** comprising: a memory, a transceiver and a processor;
the memory, configured to store computer instructions;
the transceiver, configured to receive and transmit data under the control of the processor;
the processor, configured to read the computer instructions in the memory and execute following operations:
controlling the transceiver to receive first indication information transmitted from a sidelink communication receiving terminal through a sidelink interface, and perform selection or re-selection of one or more sidelink carriers and/or bandwidth parts based on the first indication information, wherein the first indication information is used to indicate the sidelink carriers and/or bandwidth parts recommended by the sidelink communication receiving terminal.

26. the terminal according to claim 25, **characterized in that** the sidelink carriers and/or bandwidth parts recommended by the sidelink communication receiving terminal comprises at least one of the following:
the sidelink carriers and/or bandwidth parts currently available to the sidelink communication receiving terminal; or
the sidelink carriers and/or bandwidth parts supported by capabilities of the sidelink communication receiving terminal.

27. the terminal according to claim 25 or 26, **characterized in that** the processor is configured to:
determine a first intersection of the sidelink carriers and/or bandwidth parts supported by capabilities of the sidelink communication transmitting terminal and the sidelink carriers and/or bandwidth parts indicated by the first indication information, and take the sidelink carriers and/or bandwidth parts comprised in the first intersection as a candidate resource when the sidelink communication transmitting terminal performs selection or re-selection of the sidelink carriers and/or bandwidth parts; or
determine a second intersection between the sidelink carriers and/or bandwidth parts supported by capabilities of the sidelink communication transmitting terminal, the sidelink carriers and/or bandwidth parts indicated by the first indication information and the sidelink carriers and/or bandwidth parts in a sidelink resource pool configured by a network device, and take the sidelink carriers and/or bandwidth parts comprised in the second intersection as the candidate resource when the sidelink communication transmitting terminal performs selection or re-selection of the sidelink carriers and/or bandwidth parts;
wherein the network device is a network device that serves the sidelink communication transmitting terminal.

28. the terminal according to claim 27, **characterized in that** the processor is further configured to:
in the case that the candidate resource is licensed spectrum, perform selection or re-selection of the sidelink carriers and/or bandwidth parts based on a channel busy radio (CBR) or an side link channel statement information (SL-CSI) on the licensed spectrum;
in the case that the candidate resource is unlicensed spectrum, perform selection or re-selection of the sidelink carriers and/or bandwidth parts based on received signal strength indication (RSSI) or channel occupation (CO) on the unlicensed spectrum.

29. the terminal according to claim 25, **characterized in that** the processor is configured to:
in the case that the sidelink communication transmitting terminal is in radio resource control (RRC) connected state at an Uu interface, or in the case that the sidelink communication transmitting terminal is in RRC connected state at the Uu interface and uses a resource allocation mode scheduled by network, transmit, by the transceiver, the sidelink carriers and/or bandwidth parts recommended by the sidelink communication receiving terminal as a resource indication information to a network device that serves the sidelink communication transmitting terminal, and receive, by the transceiver, resource configuration information transmitted from the network device, determine the sidelink carriers and/or bandwidth parts to be used by the sidelink communication transmitting device based on the resource configuration information.

30. A terminal, wherein the terminal is a sidelink communication receiving terminal, **characterized by** comprising: a memory, a transceiver and a processor;
the memory, configured to store computer instructions;
the transceiver, configured to receive and transmit data under the control of the processor;
the processor, configured to read the computer instructions in the memory and execute following operations:
generate first indication information, wherein the first indication information is used to indicate one or more sidelink carriers and/or bandwidth parts recommended by the sidelink communication receiving terminal; and transmit, by the transceiver, the first indication information to a sidelink communication transmitting terminal through a sidelink interface.

31. the terminal according to claim 30, **characterized in that** the sidelink carriers and/or bandwidth parts recommended by the sidelink communication receiving terminal comprises at least one of the following:
the sidelink carriers and/or bandwidth parts currently available to the sidelink communication receiving terminal; or
the sidelink carriers and/or bandwidth parts supported by capabilities of the sidelink communication receiving terminal.

32. the terminal according to claim 31, **characterized in that** in the case that the sidelink carriers and/or bandwidth parts recommended by the sidelink communication receiving terminal comprises the sidelink carriers and/or bandwidth parts currently available to the sidelink communication receiving terminal, the processor is configured to:
determine the bandwidth part currently available to the sidelink communication receiving terminal through any one scheme of following:
determining the sidelink carriers and/or bandwidth parts currently available to the sidelink communication receiving terminal based on carrier capability information of the sidelink communication receiving terminal and/or channel quality on each carrier;
determining the sidelink carriers and/or bandwidth parts currently available to the sidelink communication receiving terminal based on the carrier capability information of the sidelink communication receiving terminal and/or interference situation on each carrier;
taking the sidelink carriers and/or bandwidth parts which satisfies a first set condition as the sidelink carriers and/or bandwidth parts currently available to the sidelink communication receiving terminal; wherein the first set condition comprises any one or a combination of the following conditions:
channel busy ratio (CBR) corresponding to the sidelink carriers and/or bandwidth parts is lower than a CBR threshold;
reference signal receiving power (RSRP) corresponding to the sidelink carriers and/or bandwidth parts is lower than an RSRP threshold;
receiving signal strength indicator (RSSI) corresponding to the sidelink carriers and/or bandwidth parts is lower than an RSSI threshold;
channel occupation (CO) corresponding to the sidelink carriers and/or bandwidth parts is lower than a CO threshold;
the sidelink carriers and/or bandwidth parts supported by both the sidelink communication transmitting terminal and the sidelink communication receiving terminal.

33. the terminal according to claims 30 to 32, **characterized in that** the processor is further configured to:
control the transceiver to receive second indication information transmitted from the sidelink communication transmitting terminal through the sidelink interface; wherein the second indication information comprises sidelink carriers and/or bandwidth parts available to the sidelink communication transmitting terminal at the sidelink interface; or sidelink carriers and/or bandwidth parts available to the sidelink communication transmitting terminal when performing data transmission to the sidelink communication receiving terminal at the sidelink interface; and
determine the sidelink carriers and/or bandwidth parts to be monitored based on the second indication information.

34. A network device, **characterized by** comprising: a memory, a transceiver and a processor;
the memory, configured to store computer instructions;
the transceiver, under control of the processor, configured to receive resource indication information transmitted from a sidelink communication transmitting terminal; wherein the resource indication information comprises one or more sidelink carriers and/or bandwidth parts recommended by a sidelink communication receiving terminal; the sidelink communication receiving terminal communicates with the sidelink communication transmitting terminal directly;
transmit the resource configuration information to the sidelink communication transmitting terminal.

35. the network device according to claim 34, **characterized in that** in the case that the sidelink communication transmitting terminal is in radio resource control (RRC) connected state at an Uu interface and uses a resource allocation mode selected by terminal itself, the resource configuration information comprises resource pool configuration information on the sidelink carrier and/or the bandwidth available to the sidelink communication transmitting terminal at the sidelink interface;
in the case that the sidelink communication transmitting terminal is in radio resource control (RRC) connected state at an Uu interface and uses a resource allocation mode scheduled by network, the resource configuration information comprises transmission resource on the sidelink carrier and/or the bandwidth available to the sidelink communication transmitting terminal at the sidelink interface.

36. A computer readable storage medium, **characterized in that** the computer readable storage medium stores computer instructions, which are executed by a processor, implementing a method according to any one of claims 1 to 6, or a method according to any one of claims 7 to 10, a method according to any one of claims 11 to 12.
